**Europäisches Patentamt**

**European Patent Office**

**Office européen des brevets**

(19)

(11) Veröffentlichungsnummer: **0 001 632**
**B1**

(12)

# EUROPÄISCHE PATENTSCHRIFT

(45) Veröffentlichungstag der Patentschrift:
05.08.81

(51) Int. Cl.³: **F 16 K 31/60**

(21) Anmeldenummer: **78101168.9**

(22) Anmeldetag: **17.10.78**

(54) **Handgriff für ein Betätigungsorgan, insbesondere für ein Ventil od. dgl. einer sanitären Armatur.**

(30) Priorität: **17.10.77 AT 7397/77**

(43) Veröffentlichungstag der Anmeldung:
**02.05.79 Patentblatt 79/9**

(45) Bekanntmachung des Hinweises auf die Patenterteilung:
**05.08.81 Patentblatt 81/31**

(84) Benannte Vertragsstaaten:
**BE CH DE FR GB NL SE**

(56) Entgegenhaltungen:
**DE-A-1 784 173**
**FR-A-2 302 474**

(73) Patentinhaber: **Schmiedl, Gustav, Salzburger Strasse 24,
A-6060 Hall in Tirol (AT)**

(72) Erfinder: **Schmiedl, Gustav, Salzburger Strasse 24,
A-6060 Hall in Tirol (AT)**

(74) Vertreter: **Hänzel, Wolfgang, Dipl.-Ing. et al, Henkel, Kern,
Feiler & Hänzel Patentanwälte Möhlstrasse 37,
D-8000 München 80 (DE)**

Handgriff für ein Betätigungsorgan, insbesondere für ein Ventil od. dgl. einer sanitären Armatur

Die Erfindung betrifft einen Handgriff für ein Betätigungsorgan, insbesondere für ein Ventil einer sanitären Armatur, bestehend aus einer den Kopf eines diesem Betätigungsorgan zugehörigen Schaftes, insbesondere den Kopf einer Ventilspindel od. dgl. umfassenden, auf diesen Kopf axial aufsteckbaren Glocke, wobei die Aussenseite des Kopfes mit der Innenseite der Glocke im montierten Zustand einen Hohlraum einschliesst.

Die bisher üblichen Handgriffe dieser Gattung werden entweder — unzureichend verankert — lediglich durch Reibung am Schaft festgehalten oder sie weisen einrastende Federn od. dgl. Halteorgane auf (DE-A-1 784 173), deren konstruktive Ausbildung jedoch mit einem erheblichen Aufwand verknüpft und oft mit Mängeln behaftet ist sowie bei der Montage und Demontage des Handgriffes Schwierigkeiten verursacht.

Aufgabe der vorliegenden Erfindung ist es, diesen Übelständen abzuhelfen und einen Handgriff zu schaffen, der bei geringstmöglichem konstruktivem Aufwand mit einem Minimum an Bestandteilen einen sicheren Sitz des Handgriffes am Schaft gewährleistet und dessen Aufstecken und Abziehen ohne jedwede zeitaufwendige Manipulationen und ohne den geringsten Mühe- und Geschicklichkeitsaufwand durchführbar ist.

Erfindungsgemäss ist der Hohlraum gegenüber der Umgebung im wesentlichen so luftdicht abgedichtet, dass beim Abziehen der Glocke von dem Kopf im Hohlraum ein diesem Abziehen entgegenwirkender Unterdruck entsteht.

Die Erfindung beruht auf der Erkenntnis, dass bei dieser Art der Anbringung der Glocke auf dem Schaftkopf diese Glocke nicht bloss durch Reibung auf diesem Kopf gehalten, sondern — überwiegend — ausserdem dadurch befestigt wird, dass bei einem Versuch, den Handgriff axial vom Kopf abzuziehen, in dem zwischen Kopf und Glocke gebildeten Hohlraum ein Unterdruck entsteht. Während das Aufstecken des Handgriffes auf den Schaftkopf mit einem gewissen Druck erfolgen muss, um dabei die in der Glocke enthaltene Luft durch z. B. eine im Ringspalt zwischen Kopf und Glocke angeordnete Dichtung hindurchzudrücken und aus der Glocke zu verdrängen, setzt sich beim Abziehen des Handgriffes vom Schaftkopf der in der Glocke entstehende Unterdruck der Axialbewegung der Glocke als Widerstand entgegen. Demnach wird die Glocke auf dem Schaftkopf nicht nur reibungsschlüssig, nämlich durch die Reibung der Dichtung, sondern gewissermassen auch atmosphärisch festgehalten, nämlich durch den sich einem Abziehen entgegensetzenden Unterdruck im Inneren der Glocke. Zur Erzielung dieser Wirkung bedarf es vorteilhafterweise lediglich einer einzigen Dichtung; die erfindungsgemässe Lösung erfordert demnach keinerlei nennenswerten konstruktiven Aufwand.

Wesentlich ist somit für die Wirkungsweise der erfindungsgemässen Handgriffbefestigung lediglich das Vorhandensein eines abgedichteten Luftraumes zwischen dem Schaftkopf und der den Handgriff bildenden Glocke, wobei hinsichtlich der Gestaltung dieser Bestandteile im Rahmen der Erfindung überaus zahlreiche Möglichkeiten offenstehen.

Nach einer bevorzugten Ausführungsform des Erfindungsgegenstandes ist der Kopf des Schaftes von einer auf diesem Schaft drehfest angebrachten Kappe gebildet, deren Aussendurchmesser geringer ist als der Innendurchmesser der Glocke. Die Höhe der Kappe ist zweckmässigerweise geringer als die Höhe der Glocke. Somit verbleibt zwischen Glocke und Kappe ein Hohlraum ausreichender Grösse.

Eine ringsumlaufende Dichtung, z. B. ein O-Ring, kann zwecks Lagesicherung in axialer Richtung in einer hierfür vorgesehenen Nut der Kappe oder auch der Glocke lagern.

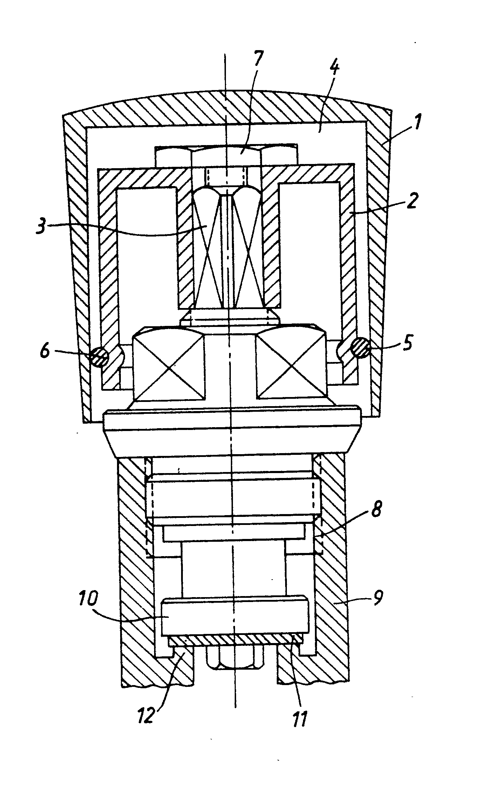

Die einzige Zeichnungsfigur stellt den Oberteil eines mit einem erfindungsgemässen Handgriff ausgestatteten Ventils einer sanitären Armatur als Ausführungsbeispiel in einem Axialschnitt dar.

Der Handgriff des dargestellten Ventils besteht aus der Glocke 1, welche axial auf die den Kopf der Ventilspindel 3 verkörpernde Kappe 2 aufgesteckt ist. Der Aussendurchmesser der Kappe 2 ist geringer als der Innendurchmesser der Glocke 1, und die Höhe der Kappe 2 ist geringer als die Höhe der Glocke 1, so dass zwischen Kappe 2 und Glocke 1 ein luftgefüllter Hohlraum 4 gebildet wird. Zwischen der zylindrischen Innenwand der Glocke 1 und der gleichfalls zylindrischen Aussenwand der Kappe 2 ist eine als O-Ring od. dgl. ausgebildete Dichtung 5 vorgesehen, die den genannten Hohlraum 4 weitgehend gegen die Atmosphäre abdichtet.

Versucht man demnach, die Glocke 1 axial von der Kappe 2, die den Kopf der Ventilspindel 3 verkörpert, abzuziehen, entsteht im Hohlraum 4 zwangsläufig ein atmosphärischer Unterdruck, so dass sich der Abziehbewegung ein erheblicher Widerstand entgegenstellt, der nur allmählich mit einem gewissen Kraftaufwand überwindbar ist. Die Fixierung der Glocke 1 auf dem Kopf der Ventilspindel 3 erfolgt demnach beim Erfindungsgegenstand im wesentlichen durch diesen Unterdruck, also atmosphärisch, und bloss sekundär auch durch die Reibung der Dichtung 5, die zwecks axialer Lagefixierung in einer Nut 6 der Kappe 2 lagert und durch Reibung auch für den Drehschluss zwischen Glocke 1 und Kappe 2 sorgt.

Beim Aufstecken des Handgriffes muss die Glocke 1 auf die Kappe 2 aufgeschoben werden, wobei durch Druckanwendung die Luft in der Glocke 1 komprimiert und durch die Dichtung 5 aus der Glocke 1 herausgedrückt wird.

Die Kappe 2 ist drehfest auf dem zur Ventilspindel 3 gehörenden Vierkant aufgesteckt und mittels einer koaxialen Schraube 7 fixiert. Das ganze Ventil ist – wie üblich – mit einem Aussengewinde im Innengewinde 8 eines Armaturkörpers 9 verschraubt und weist einen mittels der Ventilspindel 3 verstellbaren Ventilteller 10 mit einer Scheibendichtung 11 auf, welche am Ventilsitz 12 des Armaturkörpers 9 aufsitzt.

Selbstverständlich ist die Erfindung auf Betätigungsorgane und Regelorgane jedweder Art anwendbar, bei denen ein drehbarer oder verschiebbarer, schwenkbarer oder sonstwie verstellbarer Schaft an seinem freien Ende mit einem Handgriff auszustatten ist.

In seinen Einzelheiten ist der Erfindungsgegenstand mannigfach abwandelbar und ausbaufähig. So kann beispielsweise anstelle des O-Ringes beim dargestellten und erläuterten Ausführungsbeispiel eine andere Dichtung, z. B. eine Lippendichtung, vorgesehen sein, die nur beim Abziehen des Handgriffes dichtend wirksam wird, jedoch das Aufstecken des Handgriffes ohne Kraftanwendung zulässt.

## Patentansprüche

1. Handgriff für ein Betätigungsorgan, insbesondere für ein Ventil (10, 11) einer sanitären Armatur, bestehend aus einer den Kopf eines diesem Betätigungsorgan zugehörigen Schaftes, insbesondere den Kopf einer Ventilspindel (3) od.dgl. umfassenden, auf diesen Kopf axial aufsteckbaren Glocke (1), wobei die Aussenseite des Kopfes mit der Innenseite der Glocke (1) im montierten Zustand einen Hohlraum (4) einschliesst, dadurch gekennzeichnet, dass der Hohlraum (4) gegenüber der Umgebung im wesentlichen so luftdicht abgedichtet ist, dass beim Abziehen der Glocke (1) von dem Kopf im Hohlraum (4) ein diesem Abziehen entgegenwirkender Unterdruck entsteht.

2. Handgriff nach Anspruch 1, dadurch gekennzeichnet, dass der Kopf des Schaftes von einer auf dem Schaftende drehfest angebrachten Kappe (2) gebildet ist, deren Aussendurchmesser geringer ist als der Innendurchmesser der Glocke (1), wobei eine ringsumlaufende Dichtung (5), z.B. ein O-Ring, zwischen der Aussenwandung der Kappe (2) und der Innenwandung der Glocke (1) vorgesehen ist.

3. Handgriff nach Anspruch 1 oder 2, dadurch gekennzeichnet, dass die Höhe der Kappe (2) geringer ist als die Höhe der Glocke (1).

4. Handgriff nach Anspruch 2 oder 3, dadurch gekennzeichnet, dass die Dichtung (5) in einer hierfür vorgesehenen Nut (6) der Kappe (2) oder der Glocke (1) lagert.

## Claims

1. A handle for an actuating element, especially for a valve (10, 11) of a sanitary accessory device, comprising a bell (1) enclosing the head cap of a shaft associated with said actuating element, especially the head cap of a valve spindle (3) or the like, and adapted to be mounted axially on said head cap, with the outer side of said head cap defining a cavity (4) with the inner side of said bell (1) in the assembled condition, characterized in that said cavity (4) is sealed in airtight fashion relative to the ambient atmosphere substantially in such a manner that upon pulling off said bell (1) from said head cap, a negative pressure resisting such pulling off is produced within said cavity (4).

2. The handle according to claim 1, characterized in that said head cap of said shaft is formed by a cap member (2) mounted against rotation on the end portion of said shaft, the outer diameter of said cap member being smaller than the inner diameter of said bell cap (11), with a peripheral sealing element (5), for example an O-Ring, being provided between the outer wall of said cap member (2) and the inner wall of said bell (1).

3. The handle according to claims 1 or 2, characterized in that the height of said cap member (2) is smaller than the height of said bell (1).

4. The handle according to claims 2 or 3, characterized in that said sealing element (5) is mounted in an associated groove (6) provided in said cap member (2) or said bell (1).

## Revendications

1. Poignée pour un organe de commande, notamment pour un clapet (10, 11) d'un robinet pour appareils sanitaires, comportant une calotte (1) qui enveloppe la tête d'une tige dudit organe de commande, notamment la tête d'une tige de robinet (3) etc., ladite calotte pouvant être emboîtée axialement sur ladite tête, de façon que la face extérieure de la tête forme, avec la face intérieure de la calotte (1), après montage, une chambre étanche (4), poignée caractérisée en ce que la chambre (4) est close de façon suffisamment hermétique par rapport à l'atmosphère afin qu'une traction exercée sur la calotte (1) pour la démonter provoque, à l'intérieur de la chambre (4), une dépression qui s'oppose audit démontage.

2. Poignée selon la revendication 1, caractérisée en ce que la tête de la tige est constituée par un capuchon (2) bloqué en rotation sur l'extrémité de ladite tige et dont le diamètre extérieur au diamètre intérieur de la calotte (1), un organe d'étanchéité annulaire (5), par exemple un joint torique, étant disposé entre la paroi extérieure du capuchon (2) et la face intérieure de la calotte (1).

3. Poignée selon la revendication 1 ou 2, caractérisée en ce que la hauteur du capuchon (2) est inférieure à celle de la calotte (1).

4. Poignée selon la revendication 2 ou 3, caractérisée en ce que le joint d'étanchéité (5) est logé dans une gorge (6) prévue à cet effet soit dans le capuchon (2), soit dans la calotte (1).